(19) Europäisches Patentamt
European Patent Office
Office européen des brevets

(11) EP 2 093 957 A1

(12) **EUROPEAN PATENT APPLICATION**
published in accordance with Art. 153(4) EPC

(43) Date of publication:
**26.08.2009 Bulletin 2009/35**

(51) Int Cl.:
***H04L 27/26*** (2006.01)  ***H04N 7/68*** (2006.01)

(21) Application number: **07845902.1**

(22) Date of filing: **12.12.2007**

(86) International application number:
**PCT/CN2007/003547**

(87) International publication number:
**WO 2008/071085 (19.06.2008 Gazette 2008/25)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **12.12.2006 CN 200610167247**

(71) Applicant: **Huawei Technologies Co., Ltd.
Longgang District,
Shenzhen,
Guangdong 518129 (CN)**

(72) Inventors:
• **LEUNG, Raymond W. K.**
**Guangdong 518129 (CN)**
• **YAO, Jun**
**Guangdong 518129 (CN)**
• **MA, Yanzhuo**
**Shaanxi 710071 (CN)**
• **CHANG, Yilin**
**Shaanxi 710071 (CN)**
• **HUO, Junyan**
**Shaanxi 710071 (CN)**

(74) Representative: **Pfenning, Meinig & Partner GbR
Patent- und Rechtsanwälte
Theresienhöhe 13
80339 München (DE)**

(54) **METHOD AND SYSTEM OF ERROR CONCEALMENT**

(57) A method for concealing errors includes: the transmitting end splits the received compressed video data into slice structures, allocates the adjacent slice structures to non-adjacent OFDM sub-channels or sub-channel groups, and sends the slice structures to the receiving end; the receiving end conceals the errors on a slice structure according to the slice structure which is chronologically or spatially related to the erroneous slice structure if detecting that any error occurs on the slice structure. A system for concealing errors includes a transmitting end and a receiving end. The transmitting end includes a slice splitting module and a frequency domain interleaving module; the receiving end includes a domain de-interleaving module, a decompression and error detecting module, and an error concealing module. The technical solution under the present invention slashes the probability of concurrence of errors on adjacent slice structures, improves the error concealment efficiency greatly, and slashes the probability of concurrence of errors on the slice structures in the counterpart position of adjacent video frames.

Figure 2

**Description**

**Field of the Invention**

The present invention relates to the field of video transmission technologies and in particular to a method and system for concealing errors, a transmitting end, and a receiving end.

**Background of the Invention**

With the development of communication technologies, video streams can be transmitted over radio channels. As a core technology of mobile communication in the future, Orthogonal Frequency Division Multiplexing (OFDM) will be a primary modulation technology for broadband radio transmission. However, the OFDM channel is characterized by time varying and frequency selection fading, and tends to generate errors in the transmission process. Video data transmitted over OFDM channels is vulnerable to errors. Especially in the case of burst errors, video transmission may incur massive packet loss. Consequently, a large number of video blocks are lost at the receiving end, which impairs the video data recovery quality drastically. When errors occur, the receiving end needs to conceal the errors of data in order to recover the original video data as far as possible.

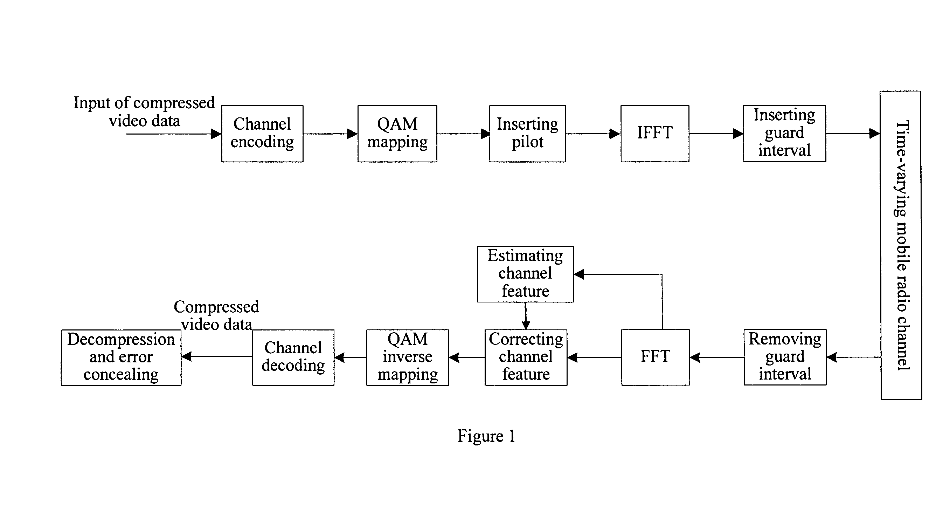

Figure 1 shows the process of concealing errors of video data transmitted over OFDM channels in the prior art. The process includes the following steps:

Step 101: Video data is received.

Step 102: Channel encoding for video data is performed.

Step 103: Quadrature Amplitude Modulation (QAM) mapping for encoded data is performed.

Step 104: Pilot signals are inserted into the set OFDM sub-channel.

Step 105: Inverse Fast Fourier Transform (IFFT) for the QAM-mapped data and the inserted pilot signals is performed to obtain OFDM symbols.

Step 106: A guard interval is inserted between OFDM symbols to obtain a complete OFDM signal.

Step 107: After receiving the OFDM signal, the receiving end removes the guard interval, performs Fast Fourier Transform (FFT), performs channel feature estimation and correction and channel decoding according to the inserted pilot signal, and obtains the original compressed video data.

Step 108: The receiving end decompresses the compressed video data, and detects errors of video data. According to the error features such as error position, the receiving end conceals the errors through time domain, for example, video data whose position is related to the position of the erroneous data in adjacent frame, or space domain, for example, adjacent video data in the same frame, and recovers the video data.

In the channel decoding process, the transmitting end inserts check information into video data; the receiving end may detect errors of the video data through the check information.

The defects of the prior art are: when many errors occur continuously, the errors of several continuous frames usually occur on multiple adjacent OFDM sub-channels concurrently. Namely, the adjacent data in the same frame and the data in the counterpart position of the adjacent frame generate errors concurrently. It is evident that: on this occasion, the errors occur on the same area of the continuous frame, and hence it is impossible to use the space relevance or time relevance to conceal errors of data effectively or recover the original video data correctly, which deteriorates the video output quality.

**Summary of the Invention**

Various embodiments of the present invention provide a method and system for concealing errors, a transmitting end, and a receiving end to improve the efficiency of concealing errors.

The technical solution under an embodiment of the present invention includes as follows:

A method for concealing errors includes:

receiving, by the transmitting end, compressed video data and splitting the compressed video data into slice structures;
allocating the adjacent slice structure to the non-adjacent QFDM sub-channel or sub-channel group and sending the slice structure to the receiving end;
reading, by the receiving end, the slice structure from the OFDM sub-channel or sub-channel group and detecting the slice structure; and
if errors are detected on a slice structure, concealing the errors of the slice structure according to the slice structure which is chronologically or spatially related to the erroneous slice structure.

A system for concealing errors includes:

a transmitting end, configured to, after receiving compressed video data input externally, split the compressed video data into slice structures, allocate adjacent slice structures to the non-adjacent OFDM sub-channel or sub-channel group, and send the slice structures to the receiving end; and

a receiving end, configured to read the slice structures on the OFDM sub-channel or sub-channel group from the transmitting end, and, if any error is detected on a slice structure, conceal the error of the slice structure according to the slice structure which is chronologically or spatially related to the erroneous slice structure.

The transmitting end further includes:

a slice splitting module, configured to split compressed video data input externally into slice structures and send the slice structures to the frequency domain interleaving module; and

a frequency domain interleaving module, configured to allocate the received adjacent slice structures of the current video frame to the non-adjacent OFDM sub-channel or sub-channel group and send the slice structures to the receiving end.

The receiving end further includes:

a frequency domain de-interleaving module, configured to read the slice structures on each OFDM sub-channel or sub-channel group from the transmitting end, arrange the slice structures, and send the arranged slice structures to the decompression & error detection module;

a decompression & error detection module, configured to decompress the received slice structure, and if any error is detected on the slice structure, send the slice structure information to the error concealing module; and

an error concealing module, configured to, after receiving the slice structure information from the decompression & error detection module, conceal the errors of the slice structure according to the slice structure which is chronologically or spatially related to the erroneous slice structure.

Compared with the related art, the embodiment of the present invention uses a transmitting end to split the compressed video data into slice structures, and allocate the adjacent slice structures to non-adjacent OFDM sub-channels or sub-channel groups, which slashes the probability of errors simultaneously occurring on the adjacent slice structures in the same video frame, improves the error concealment efficiency and video recovery quality greatly.

Further, the embodiment of the present invention updates the rules of allocating adjacent slice structures to non-adjacent OFDM sub-channels or sub-channel groups, which slashes the probability of errors simultaneously occurring on the slice structures in the counterpart position of the adjacent video frame, and further improves the error concealment efficiency and video recovery quality.

**Brief Description of the Drawings**

Figure 1 shows the process of transmitting video data on an OFDM channel and concealing errors in the related art;

Figure 2 shows the process of transmitting video data on an OFDM channel and concealing errors in an embodiment of the present invention;

Figure 3 shows the process of transmitting video data on an OFDM channel and concealing errors when the compressed video data is a stream-oriented application according to the first embodiment of the present invention;

Figure 4 shows the process of transmitting video data on an OFDM channel and concealing errors when the compressed video data is a packet-oriented application according to the second embodiment of the present invention;

Figures 5-1, 5-2 and 5-3 are instances of concealing errors after frequency domain interleaving is performed for the compressed video data in an embodiment of the present invention;

Figures 6-1, 6-2 and 6-3 are instances of concealing errors after frequency domain interleaving and time domain interleaving are performed for the compressed video data in an embodiment of the present invention;

Figure 7 shows the composition of a system for transmitting compressed video data on an OFDM channel and concealing errors in an embodiment of the present invention;

Figure 8 shows the structure of a transmitting end provided in an embodiment of the present invention;

Figure 9 is the first schematic diagram of the structure of a frequency domain interleaving module of the transmitting end in an embodiment of the present invention;

Figure 10 is the second schematic diagram of the structure of a frequency domain interleaving module of the transmitting end in an embodiment of the present invention; and

Figure 11 shows the structure of a receiving end provided in an embodiment of the present invention.

**Detailed Description of the Invention**

The present invention is hereinafter described in detail with reference to embodiments and accompanying drawings.

The core idea of the present invention is: a transmitting end splits the input compressed video data into slice structures, allocates adjacent slice structures to non-adjacent OFDM sub-channels or sub-channel groups, and sends them to a receiving end; the receiving end rearranges the slice structures on the OFDM sub-channels or sub-channel groups, and detects errors; if any error is detected on a slice structure, the receiving end conceals the error of the slice structure according to the slice structure which is chronologically or spatially related to the erroneous slice structure.

In the embodiment of the present invention, the method for allocating adjacent slice structure to non-adjacent OFDM sub-channels or sub-channel groups is called "frequency domain interleaving method".

Further, in the embodiment of the present invention, the rule of allocating the slice structures to OFDM sub-channels or sub-channel groups may be modified at intervals. Namely, different frequency domain interleaving methods are used at different times. This method is called "time domain interleaving method".

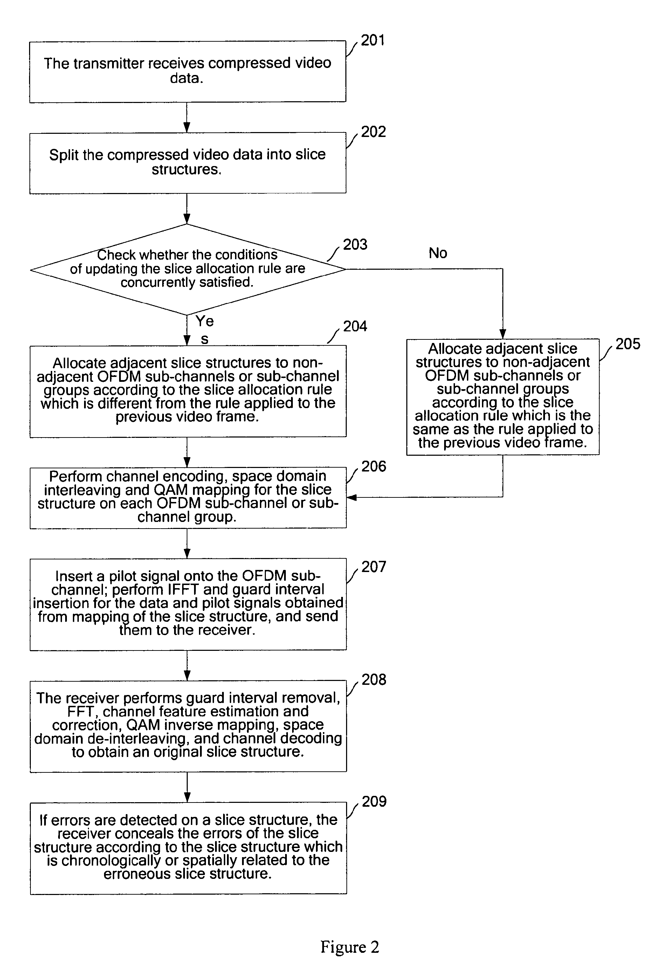

Figure 2 shows the process of concealing errors during transmission of compressed video data on an OFDM channel in an embodiment of the present invention. The process includes the following steps:

Step 201: Compressed video data is received.

Step 202: The received compressed video data is split into slice structures.

The method of splitting a slice structure is defined in the existing video compression standards. In this step, the slice structure of the compressed video data may be split according to the video compression standards.

Step 203: It is determined whether the conditions of updating the slice allocation rule are currently satisfied. If satisfied, the process proceeds to 204; otherwise, step 205 is performed.

Step 204: Adjacent slice structures are allocated to non-adjacent OFDM sub-channels or sub-channel groups according to the slice allocation rule which is preset and different from the rule applied to the previous video frame. The process proceeds to step 206.

Step 205: Adjacent slice structures are allocated to non-adjacent OFDM sub-channels or sub-channel groups according to the slice allocation rule which is the same as the rule applied to the previous video frame.

Generally, the total number of OFDM sub-channels (M) is greater than the total number of slice structures (N). Suppose that $K = \lfloor M/N \rfloor$, namely, K is a result of rounding down the quotient of M divided by N, then K is the quantity of OFDM sub-channels contained in each OFDM sub-channel group, and each OFDM sub-channel group corresponds to a slice structure; if P=M%N and P is not 0, then the control data (such as frequency domain interleaving and time domain interleaving control data) is transmitted on the remaining P OFDM sub-channels. If P = 0, the control data together with a slice structure is allocated to an OFDM sub-channel.

Step 206: Channel encoding, space domain interleaving and QAM mapping are performed for the slice structure allocated to each OFDM sub-channel or sub-channel group.

Step 207: A pilot signal is inserted onto the OFDM sub-channel; IFFT and guard interval insertion are performed for the data obtained from mapping of QAM and the inserted pilot signal to obtain OFDM signals, and the OFDM signals are sent to the receiving end.

The spatial domain interleaving method used in this step is the same as the spatial domain interleaving method in the prior art.

Step 208: After receiving the OFDM signal, the receiving end removes the guard interval, performs Fast Fourier Transform (FFT), performs channel correction and channel decoding according to the inserted pilot signal, and obtains the original slice structure on each OFDM sub-channel or sub-channel group.

Step 209: The receiving end decompresses the compressed video data composed of slice structures, and detects errors; if any error is detected on a slice structure, the receiving end conceals the error of the slice structure according to the successfully received slice structure which is chronologically or spatially related to the erroneous slice structure.

More particularly, the slice structure chronologically related to the erroneous slice structure refers to the slice structure which is located in the reference video frame of the video frame containing the erroneous slice structure, and is related to the position of the erroneous slice structure. The reference video frame may be the frame which is one or two frames ahead of the current video frame. The reference video frame information is sent to the decoder through compressed code streams. The slice structure is composed of macro blocks. Each macro block includes motion vector information which indicates the motion distance of the macro block in the current video frame relative to the reference video frame. Therefore, according to the motion vector information of one macro block, another macro block closest to the foregoing macro block (namely, the one most pertinent to the foregoing macro block) can be searched out in the reference video frame. Therefore, when a macro block in the slice structure incurs errors, the macro block most pertinent to the erroneous macro block may be searched out in the reference video frame according to the motion vector information in the erroneous macro block, and the errors of the erroneous macro block may be concealed according to the pertinent macro block.

The slice structure spatially related to the erroneous slice structure refers to the slice structure which is located in the video frame containing the erroneous slice structure, and is adjacent to the erroneous slice structure. When errors occur on a macro block in the slice structure, errors of the macro block may be concealed by using the macro block which is located in the slice structure prior to or next to the erroneous slice structure and located in the position identical to or adjacent to the position of the erroneous macro block in the slice structure.

The compressed video data transmitted over an OFDM channel breaks down into stream-oriented application and packet-oriented application. For stream-oriented applications, the receiving end must know the rule of the transmitting end allocating slice structures to OFDM sub-channels or sub-channels groups, so as to rearrange the slice structures on the received OFDM sub-channels or sub-channel groups and recover the original compressed video data. For packet-oriented application, the compressed video data is transmitted in the form of packets. Each slice structure includes several packets, and each packet has a serial number. The serial number of the packet is sent together with the packet data to the receiving end. Therefore, the receiving end does not need to know the rule of the transmitting end allocating slice structures to the OFDM sub-channels or sub-channel groups; and only needs to rearrange the slice structures according to the serial number of each packet in the slice structure, so as to obtain the original compressed video data. The method for concealing errors is described below in the scenarios that the compressed video data is oriented to streams and packets respectively.

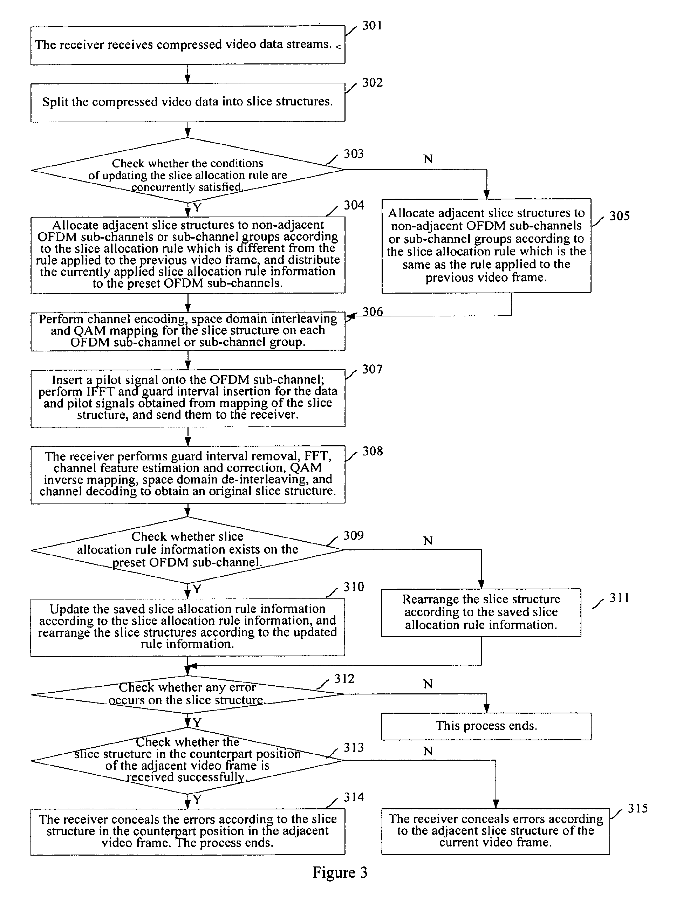

Figure 3 shows the process of concealing errors during transmission of compressed video data on an OFDM channel according to the first embodiment of the present invention. The process includes the following steps:

Step 301: The transmitting end receives compressed video data streams.

Step 302: The transmitting end splits the received compressed video data into slice structures.

Step 303: The transmitting end determines whether the conditions of updating the slice allocation rule are currently satisfied. If the conditions are satisfied, the process proceeds to 304; otherwise, step 305 is performed.

Step 304: The transmitting end allocates adjacent slice structures to non-adjacent OFDM sub-channels or sub-channel groups according to the slice allocation rule which is preset and different from the rule applied to the previous video frame; and allocates the currently updated slice allocation rule information to the preset OFDM sub-channel. The process proceeds to step 306.

Each OFDM sub-channel or sub-channel group corresponds to a buffer. The slice structure is allocated to the buffer corresponding to the OFDM sub-channel or sub-channel group.

The slice allocation rule may be updated every a fixed number of frames. After detecting that the number of currently received video frames is equal to the threshold for updating the preset slice allocation rule, the transmitting end updates the slice allocation rule. Alternatively, the transmitting end updates the slice allocation rule at intervals, namely, updates after detecting that the current time hits the preset update time. Alternatively, the transmitting end updates the slice allocation rule as indicated by the receiving end. Generally, when the receiving end performs channel feature estimation for the OFDM sub-channel, if detecting that the quality of the OFDM sub-channel is deteriorated (for example, lower than the preset channel quality), the receiving endsends an indication of updating slice allocation rules to the transmitting end. Alternatively, during channel decoding for the data on the OFDM sub-channel or sub-channel group, if detecting that data errors exist and the number of errors or non-correctible errors hits a preset threshold, the receiving end sends an indication of updating the slice allocation rule to transmitting end. Alternatively, during decompression of the compressed video data composed of slice structures, if detecting that a slice structure is erroneous and the number of errors hits a preset threshold, the receiving end sends an indication of updating the slice allocation rule to the transmitting end.

The transmitting end and the receiving end negotiate the specific OFDM sub-channel to which the currently updated slice allocation rule information is distributed beforehand; or the network administrator pre-configures the rule information onto the transmitting end and the receiving end. Generally, the slice allocation rule information is allocated to idle OFDM sub-channels not occupied by the slice structure. For example, if the first idle OFDM sub-channel not occupied by the slice structure is preset for the purpose of storing the currently updated slice allocation rule information, supposing that there are 22 OFDM sub-channels numbered 0-21, of which sub-channels 0-19 are allocated to the slice structure, then sub-channels numbered 20 may be used to transmit the currently applied slice allocation rule information; and the sub-channel numbered 21 may be used to transmit other control information. If an OFDM sub-channel is occupied by a slice structure, the slice allocation rule information together with a slice structure is allocated to an OFDM sub-channel.

Step 305: Adjacent slice structures are allocated to non-adjacent OFDM sub-channels or sub-channel groups according to the slice allocation rule which is the same as the rule applied to the previous video frame.

Step 306: Channel encoding, space domain interleaving and QAM mapping consecutively are performed for the slice structure allocated to each OFDM sub-channel or sub-channel group.

Step 307: A pilot signal is inserted onto the OFDM sub-channel; IFFT and guard interval insertion are performed for the data obtained from mapping of QAM and the inserted pilot signal to obtain OFDM signals, and the OFDM signals are sent to the receiving end.

Step 308: After receiving the OFDM signal, the receiving end removes the guard interval, performs Fast Fourier Transform (FFT), performs channel correction and channel decoding according to the inserted pilot signal consecutively, and obtains the original slice structure on each OFDM sub-channel or sub-channel group.

Step 309: The receiving end determines whether updated slice allocation rule information exists on the preset OFDM sub-channel; if exists, the process proceeds to 310; otherwise, step 311 is performed.

Step 310: The receiving end uses the slice allocation rule information to update the currently saved slice allocation rule information, and arrange the OFDM sub-channels or the slice structures on the sub-channel according to the updated slice allocation rule information. The process proceeds to step 312.

Step 311: The receiving end arranges the OFDM sub-channels or the slice structures on the sub-channel according to the currently saved slice allocation rule information.

Step 312: The receiving end decompresses the compressed video data composed of slice structures, and determines whether any slice structure has errors. If any slice structure has errors, the process proceeds to step 313; otherwise, the process ends.

Step 313: The receiving end determines whether the slice structure in the counterpart position of the erroneous slice structure in the adjacent video frame is received successfully; if received successfully, the process proceeds to 314; otherwise, step 315 is performed.

Step 314: The receiving end conceals the errors of the erroneous slice structures according to the slice structure in the counterpart position in the adjacent video frame. The process is ended.

An adjacent video frame may be the frame prior to or next to the current video frame.

Step 315: The receiving end conceals the errors of the erroneous slice structures according to the slice structure which is successfully received by the current video frame and adjacent to the erroneous slice structure.

The adjacent slice structure may be the slice structure prior to or next to the current slice structure in the same video frame.

In this embodiment, if slice allocation rule information is allocated on the preset OFDM sub-channel, the slice allocation rule information may take no part in channel encoding, spatial domain interleaving, and QAM mapping, and undergo IFFT and guard interval insertion together with the slice structure on other OFDM sub-channels. Accordingly, the receiving end can obtain the original slice allocation rule information only by removing the guard interval and performing IFFT operation for the data on the preset OFDM sub-channel, without the need of channel feature estimation or correction, QAM inverse mapping, spatial domain de-interleaving, and channel decoding.

In the practical application, the transmitting end and the receiving end may pre-negotiate the applicable slice allocation rule before transmitting compressed video data, and the conditions of updating the allocation rule; alternatively, the network administrator may pre-configure the slice allocation rule and the conditions of updating the allocation rules onto the transmitting end and the receiving end.

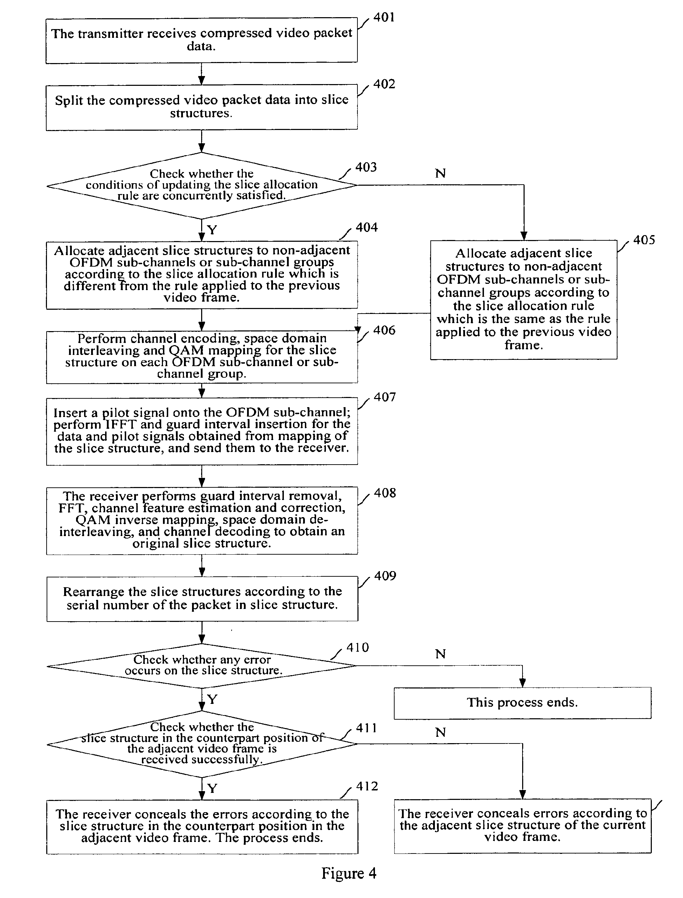

Figure 4 shows the process of concealing errors when the compressed video data is oriented to packets according to the second embodiment of the present invention. The process includes the following steps:

Step 401: The transmitting end receives compressed video packet data.

Step 402: The transmitting end splits the received compressed video packet data into slice structures.

Step 403: The transmitting end determines whether the conditions of updating the slice allocation rule are currently satisfied. If the conditions are satisfied, the process proceeds to 404; otherwise, step 405 is performed.

Step 404: The transmitting end allocates adjacent slice structures to non-adjacent OFDM sub-channels or sub-channel groups according to the slice allocation rule which is preset and different from the rule applied to the previous video frame. The process proceeds to step 406.

Step 405: The transmitting end allocates adjacent slice structures to non-adjacent OFDM sub-channels or sub-channel groups according to the slice allocation rule which is the same as the rule applied to the previous video frame.

Step 406: The transmitting end performs channel encoding, space domain interleaving and QAM mapping consecutively for the slice structure allocated to each OFDM sub-channel or sub-channel group.

Step 407: The transmitting end inserts a pilot signal onto the OFDM sub-channel; performs IFFT and guard interval insertion for the data obtained from mapping of QAM and the inserted pilot signal to obtain OFDM signals, and sends the OFDM signals to the receiving end.

Step 408: After receiving the OFDM signal, the receiving end removes the guard interval, performs Fast Fourier Transform (FFT), performs channel correction and channel decoding according to the inserted pilot signal consecutively, and obtains the original slice structure on each OFDM channel.

Step 409: According to the serial number of the packet data in the slice structure, the receiving end arranges the slice structure.

Step 410: The receiving end decompresses the compressed video data of slice structures, and determines whether any slice structure has errors. If any slice structure has errors, the process proceeds to step 411; otherwise, the process ends.

Step 411: The receiving end determines whether the slice structure in the counterpart position of the erroneous slice structure in the adjacent video frame is received successfully; if received successfully, the process proceeds to 412; otherwise step 413 is performed.

Step 412: The receiving end conceals the errors of the erroneous slice structures according to the slice structure in the counterpart position in the adjacent video frame. The process is ended.

Step 413: The receiving end conceals the errors of the erroneous slice structures according to the slice structure which is successfully received by the current video frame and adjacent to the erroneous slice structure.

Given below is an instance of using the frequency domain interleaving method to conceal errors.

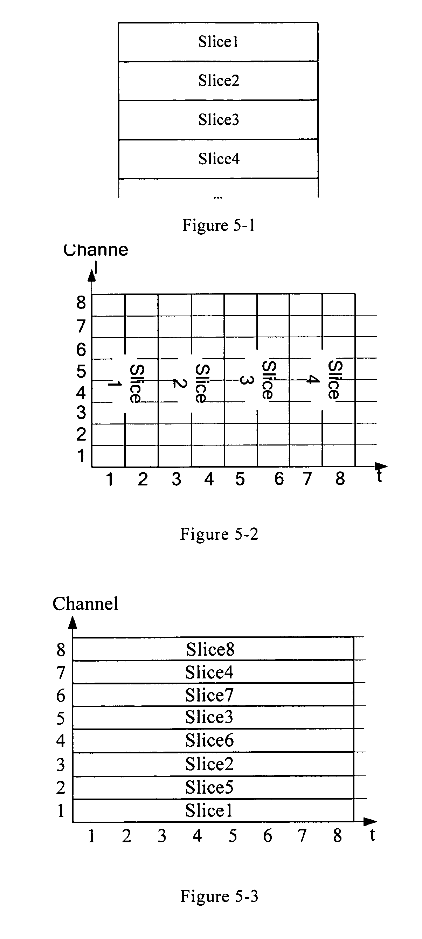

Figure 5-1 is a schematic diagram of splitting a slice structure of compressed video data; Figure 5-2 is a schematic diagram of allocating slice structures on each OFDM sub-channel when no frequency domain interleaving is performed for the compressed video data; Figure 5-3 is a schematic diagram of allocating slice structures on each OFDM sub-channel when frequency domain interleaving is performed for the compressed video data. Suppose that the OFDM sub-channels 4 and 5 generate burst errors between time 2 and time 7, slices 1-4 may be affected by the errors concurrently when no frequency domain interleaving is performed for the compressed video data; because slices 1-4 are adjacent areas, the burst errors make it impossible to conceal errors effectively for the compressed video data in a large area, and impossible to recover correct compressed video data. After the frequency domain interleaving is performed for the compressed video data, one slice structure can be transmitted on only one OFDM sub-channel. Therefore, the errors of sub-channels 4 and 5 affect slice 3 and slice 6 only, and it is easy to use slice 2 and slice 4 to cover errors of slice 3, and use slice 5 and slice 7 to conceal errors of slice 6. As a result, the error data can be recovered effectively.

Given below is an instance of using the frequency domain interleaving method and time domain interleaving method to conceal errors.

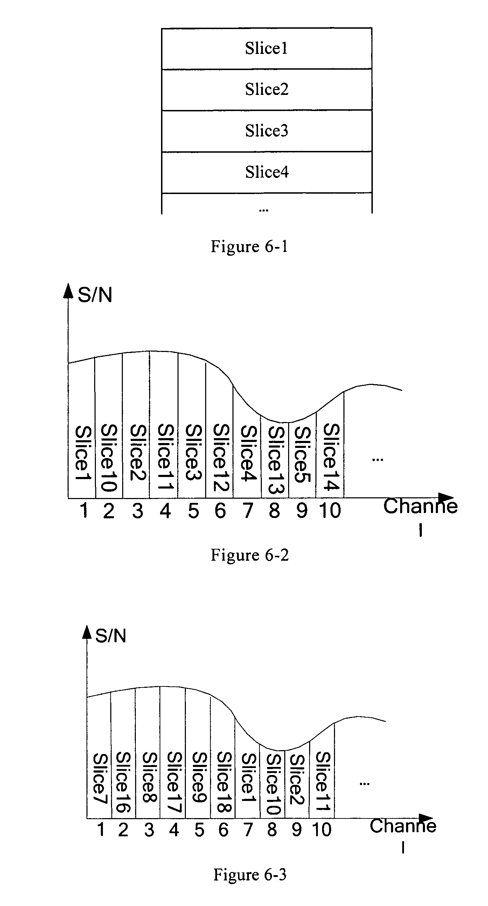

Figure 6-1 is a schematic diagram of splitting a slice structure of compressed video data; Figure 6-2 is a schematic diagram of allocating slice structures on each OFDM sub-channel when a frequency domain interleaving method is applied at time t0; Figure 6-3 is a schematic diagram of allocating slice structures on each OFDM sub-channel when another frequency domain interleaving method is applied at time tl. Suppose that burst errors occur on OFDM sub-channels 7-9 at time t0, slices 4, 13 and 5 are affected by errors. At time t1, if the burst errors on OFDM sub-channels 7-9 still exist, slice 1, 10 and 2 are affected. As a result, after time domain interleaving is applied, the position of the slice structure affected by the burst errors is different at different times. Therefore, it is evitable that the slice structure in the same position is unable to be received successfully because the slice structure in the same position always generates errors, and it is evitable that recovery of the compressed video data is affected.

In the embodiment of the present invention, the frequency domain interleaving method only needs to ensure that the adjacent slice structures are allocated to non-adjacent OFDM sub-channels or sub-channel groups. Three frequency domain interleaving methods under the present invention are described below.

(i) Two-time odd-even interleaving method

Suppose that the serial number of the input slice structure is $x_i$; the serial number of the mapped OFDM sub-channel or sub-channel group is $z_i$; $y_i$ is an intermediate variable, $i = 0,1,..., N-1$, $N$ is the total number of slice structures, then the following formulas apply:

It should be noted that, the $\lfloor A \rfloor$ in the following formula means rounding-down of A if $A$ is a rational number.

If N is an even number,

$$y_i = x_{\lfloor i/2 \rfloor * 2 + (1 - i\%2)}, \quad i = 0,1,...,N-1 \tag{1}$$

$$z_0 = y_0 \tag{2}$$

$$z_i = y_{1 + \lfloor (i-1)/2 \rfloor * 2 + (1 - (i-1)\%2)}, \quad i = 1,2,...,N-2 \tag{3}$$

$$z_{N-1} = y_{N-1} \tag{4}$$

If N is an odd number,

$$y_i = x_{\lfloor i/2 \rfloor *2+(1-i\%2)}, \quad i = 0,1,...,N-2 \tag{5}$$

$$y_{N-1} = x_{N-1} \tag{6}$$

$$z_0 = y_0 \tag{7}$$

$$z_i = y_{1+\lfloor (i-1)/2 \rfloor *2+(1-(i-1)\%2)}, \quad i = 1,2,...,N-1 \tag{8}$$

According to the foregoing formulas, the mapping relation between the serial number ($x_i$) of the slice structure and the serial number ($z_i$) of the OFDM sub-channel or sub-channel group when the total number of slice structures (N) is an even number "10" or odd number "9" is given below:

Table 1 shows the mapping relation between the serial number ($x_i$) of the slice structure and the serial number ($z_i$) of the OFDM sub-channel or sub-channel group when N = 10 and the two-time odd-even interleaving method is applied:

Table 1: Mapping relation between the serial number ($x_i$) of the slice structure and the serial number ($z_i$) of the OFDM sub-channel or sub-channel group when N = 10 and the two-time odd-even interleaving method is applied

| $x_i$ | $y_i$ | $z_i$ |
|---|---|---|
| 0 | 1 | 1 |
| 1 | 0 | 3 |
| 2 | 3 | 0 |
| 3 | 2 | 5 |
| 4 | 5 | 2 |
| 5 | 4 | 7 |
| 6 | 7 | 4 |
| 7 | 6 | 9 |
| 8 | 9 | 6 |
| 9 | 8 | 8 |

Table 2: Mapping relation between the serial number ($x_i$) of the slice structure and the serial number ($z_i$) of the OFDM sub-channel or sub-channel group when N = 9 and the two-time odd-even interleaving method is applied

| $x_i$ | $y_i$ | $z_i$ |
|---|---|---|
| 0 | 1 | 1 |
| 1 | 0 | 3 |
| 2 | 3 | 0 |
| 3 | 2 | 5 |
| 4 | 5 | 2 |
| 5 | 4 | 7 |
| 6 | 7 | 4 |

(continued)

| $x_i$ | $y_i$ | $z_i$ |
|---|---|---|
| 7 | 6 | 8 |
| 8 | 8 | 6 |

Table 2: Mapping relation between the serial number ($x_i$) of the slice structure and the serial number ($z_i$) of the OFDM sub-channel or sub-channel group when N = 9 and the two-time odd-even interleaving method is applied

(ii) One-second interleaving method A

Suppose that the serial number of the input slice structure is $x_i$; the serial number of the mapped OFDM sub-channel or sub-channel group is $z_i$; S = $\lfloor N/2 \rfloor$, then the following formulas apply:

If N is an even number,

$$z_i = x_{\lfloor i/2 \rfloor + a}, \quad i = 0,1,...,N-1 \tag{9}$$

where, if $i\%2 = 0$, $a = 0$ ; if $i\%2 = 1$ $a = S$.

If N is an odd number,

$$z_0 = x_{N-1} \tag{10}$$

$$z_i = x_{\lfloor (i-1)/2 \rfloor + b}, \quad i = 1,2,...,N-1 \tag{11}$$

where, if $(i - 1)\%2 = 0$, $b = 0$; if $(i -1)\%2 = 1$ $b = S$.

According to the foregoing formulas, the mapping relation between the serial number ($x_i$) of the slice structure and the serial number ($z_i$) of the OFDM sub-channel or sub-channel group when the total number of slice structures (N) is an even number "10" or odd number "9" is given below:

Table 3 shows the mapping relation between the serial number ($x_i$) of the slice structure and the serial number ($z_i$) of the OFDM sub-channel or sub-channel group when N = 10 and the one-second interleaving method A is applied:

Table 3: Mapping relation between the serial number ($x_i$) of the slice structure and the serial number ($z_i$) of the OFDM sub-channel or sub-channel group when N = 10 and the one-second interleaving method A is applied

| $x_i$ | $z_i$ |
|---|---|
| 0 | 0 |
| 1 | 5 |
| 2 | 1 |
| 3 | 6 |
| 4 | 2 |
| 5 | 7 |
| 6 | 3 |
| 7 | 8 |
| 8 | 4 |
| 9 | 9 |

Table 4 shows the mapping relation between the serial number ($x_i$) of the slice structure and the serial number ($z_i$) of the OFDM sub-channel or sub-channel group when N = 9 and the one-second interleaving method A is applied:

Table 4: Mapping relation between the serial number ($x_i$) of the slice structure and the serial number ($z_i$) of the OFDM sub-channel or sub-channel group when N = 9 and the one-second interleaving method A is applied

| $x_i$ | $z_i$ |
|---|---|
| 0 | 8 |
| 1 | 0 |
| 2 | 4 |
| 3 | 1 |
| 4 | 5 |
| 5 | 2 |
| 6 | 6 |
| 7 | 3 |
| 8 | 7 |

(iii) One-second interleaving method B

Suppose that the serial number of the input slice structure is $x_i$; the serial number of the mapped OFDM sub-channel or sub-channel group is $z_i$; S = N/2, then the following formulas apply:

If N is an even number,

$$z_i = x_{\lfloor i/2 \rfloor + a}, \quad i = 0,1,...,N-1 \tag{12}$$

where, if $i\%2=0$, $a = 0$; if $i\%2=1$, $a=S$.

If N is an odd number,

$$z_0 = x_{N-1} \tag{13}$$

$$z_i = x_{\lfloor (i-1)/2 \rfloor + b}, \quad i = 1,2,...,N-1 \tag{14}$$

where, if $(i - 1)\%2 = 0$, $b = 0$; if $(i-1)\%2 =1$, $b=S$.

According to the foregoing formulas, the mapping relation between the serial number ($x_i$) of the slice structure and the serial number ($z_i$) of the OFDM sub-channel or sub-channel group when the total number of slice structures (N) is an even number "10" or odd number "9" is given below:

Table 5 shows the mapping relation between the serial number ($x_i$) of the slice structure and the serial number ($z_i$) of the OFDM sub-channel or sub-channel group when N = 10 and the one-second interleaving method B is applied:

Table 5: Mapping relation between the serial number ($x_i$) of the slice structure and the serial number ($z_i$) of the OFDM sub-channel or sub-channel group when N = 9 and the one-second interleaving method B is applied

| $x_i$ | $z_i$ |
|---|---|
| 0 | 5 |
| 1 | 0 |
| 2 | 6 |
| 3 | 1 |
| 4 | 7 |

(continued)

| $x_i$ | $z_i$ |
|---|---|
| 5 | 2 |
| 6 | 8 |
| 7 | 3 |
| 8 | 9 |
| 9 | 4 |

Table 6 shows the mapping relation between the serial number ($x_i$) of the slice structure and the serial number ($z_i$) of the OFDM sub-channel or sub-channel group when N = 9 and the one-second interleaving method B is applied:

Table 6: Mapping relation between the serial number ($x_i$) of the slice structure and the serial number ($z_i$) of the OFDM sub-channel or sub-channel group when N = 9 and the one-second interleaving method B is applied

| $x_i$ | $z_i$ |
|---|---|
| 0 | 8 |
| 1 | 4 |
| 2 | 0 |
| 3 | 5 |
| 4 | 1 |
| 5 | 6 |
| 6 | 2 |
| 7 | 7 |
| 8 | 3 |

The time domain interleaving method in an embodiment of the present invention aims to map the slice structures in the counterpart position of adjacent video frames to different OFDM sub-channels or sub-channel groups, so that the errors can be concealed by using the slice structure in the counterpart position of the adjacent video frame when errors occur on the slice structure due to long fading of some OFDM sub-channels or sub-channel groups. Two time-domain interleaving methods in an embodiment of the present invention are given below:

(i) Interleaving handover method

The interleaving handover method is: the same frequency domain interleaving method is applied repeatedly at preset intervals or every preset number of video frames, measured in time intervals or video frames; and different frequency domain interleaving methods are applied at adjacent preset intervals or every preset number of adjacent video frames.

For example, suppose that the serial number of the video frame is M; if M is an even number, the frequency domain interleaving method is a two-time odd-even interleaving method; if M is an odd number, the frequency interleaving method is one-second interleaving method A.

For odd-number video frames and even-number video frames, different mapping relations are given below between the serial number ($x_i$) of the slice structure and the serial number ($z_i$) of the OFDM sub-channel or sub-channel group when the total number of slice structures (N) is 10 or 9:

Table 7: For odd-number video frames and even-number video frames, different mapping relations between the serial number ($x_i$) of the slice structure and the serial number ($z_i$) of the OFDM sub-channel or sub-channel group when the total number of slice structures (N) is 10 and interleaving handover is applied

| Serial number of slice structure ($x_i$) | Serial number of OFDM sub-channel or sub-channel group corresponding to even-number video frame ($z_i$) | Serial number of OFDM sub-channel or sub-channel group corresponding to odd-number video frame ($z_i$) |
|---|---|---|
| 0 | 1 | 0 |

(continued)

| Serial number of slice structure ($x_i$) | Serial number of OFDM sub-channel or sub-channel group corresponding to even-number video frame ($z_i$) | Serial number of OFDM sub-channel or sub-channel group corresponding to odd-number video frame ($z_i$) |
|---|---|---|
| 1 | 3 | 5 |
| 2 | 0 | 1 |
| 3 | 5 | 6 |
| 4 | 2 | 2 |
| 5 | 7 | 7 |
| 6 | 4 | 3 |
| 7 | 9 | 8 |
| 8 | 6 | 4 |
| 9 | 8 | 9 |

Table 8: For odd-number video frames and even-number video frames, different mapping relations between the serial number ($x_i$) of the slice structure and the serial number ($z_i$) of the OFDM sub-channel or sub-channel group when the total number of slice structures (N) is 9 and interleaving handover is applied

| Serial number of slice structure ($x_i$) | Serial number of OFDM sub-channel or sub-channel group corresponding to even-number video frame ($z_i$) | Serial number of OFDM sub-channel or sub-channel group corresponding to odd-number video frame ($z_i$) |
|---|---|---|
| 0 | 1 | 8 |
| 1 | 3 | 0 |
| 2 | 0 | 4 |
| 3 | 5 | 1 |
| 4 | 2 | 5 |
| 5 | 7 | 2 |
| 6 | 4 | 6 |
| 7 | 8 | 3 |
| 8 | 6 | 7 |

(ii) Interleaving tandem handover

The principles of the interleaving tandem handover method are: the same frequency domain interleaving method is applied repeatedly at preset intervals or every preset number of video frames; and different frequency domain interleaving methods are applied at adjacent preset intervals or every preset number of adjacent video frames; the same or different frequency domain interleaving operation is performed twice in at least one preset time interval or preset number of video frames.

For example, suppose that the serial number of the video frame is M, when M is an even number, the frequency domain interleaving method is one-second interleaving method A; when M is an odd number, the one-second interleaving method A is applied first, and the one-second interleaving method B is applied to the obtained result. For odd-number video frames and even-number video frames, different mapping relations are listed below between the serial number ($x_i$) of the slice structure and the serial number ($z_i$) of the OFDM sub-channel or sub-channel group when the total number of slice structures (N) is 10 or 9:

Table 9: For odd-number video frames and even-number video frames, different mapping relations between the serial number ($x_i$) of the slice structure and the serial number ($z_i$) of the OFDM sub-channel or sub-channel group when the total number of slice structures (N) is 10 and interleaving tandem handover is applied

| Serial number of slice structure ($x_i$) | Serial number of OFDM sub-channel or sub-channel group corresponding to even-number video frame ($z_i$) | Serial number of OFDM sub-channel or sub-channel group corresponding to $z_i$) odd-number video frame ($z_i$) |
|---|---|---|
| 0 | 1 | 3 |
| 1 | 3 | 5 |
| 2 | 0 | 1 |
| 3 | 5 | 7 |
| 4 | 2 | 0 |
| 5 | 7 | 9 |
| 6 | 4 | 2 |
| 7 | 9 | 8 |
| 8 | 6 | 4 |
| 9 | 8 | 6 |

Table 10: For odd-number video frames and even-number video frames, different mapping relations between the serial number ($x_i$) of the slice structure and the serial number ($z_i$) of the OFDM sub-channel or sub-channel group when the total number of slice structures (N) is 9 and interleaving tandem handover is applied

| Serial number of slice ($x_i$) | Serial number of buffer corresponding to even-number video frame ($z_i$) | Serial number of buffer corresponding to odd-number video frame ($z_i$) |
|---|---|---|
| 0 | 1 | 3 |
| 1 | 3 | 5 |
| 2 | 0 | 1 |
| 3 | 5 | 7 |
| 4 | 2 | 0 |
| 5 | 7 | 8 |
| 6 | 4 | 2 |
| 7 | 8 | 6 |
| 8 | 6 | 4 |

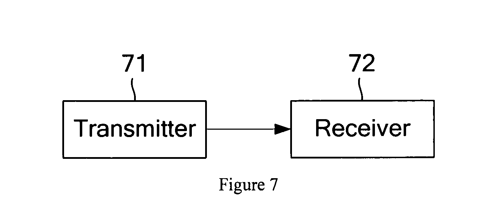

Figure 7 shows the composition of a system for concealing errors during transmission of compressed video data on an OFDM channel in an embodiment of the present invention. The system includes:

a transmitting end 71, configured to, after receiving compressed video data input externally, split the compressed video data into slice structures, allocate adjacent slice structures to non-adjacent OFDM sub-channels or sub-channel groups, and send the slice structures to the receiving end 72; and
a receiving end 72, configured to read the slice structures on the OFDM sub-channel or sub-channel group from the transmitting end 71, and, if any error is detected on a slice structure, conceal the error of the slice structure according to the successfully received slice structure which is chronologically or spatially related to the erroneous slice structure.

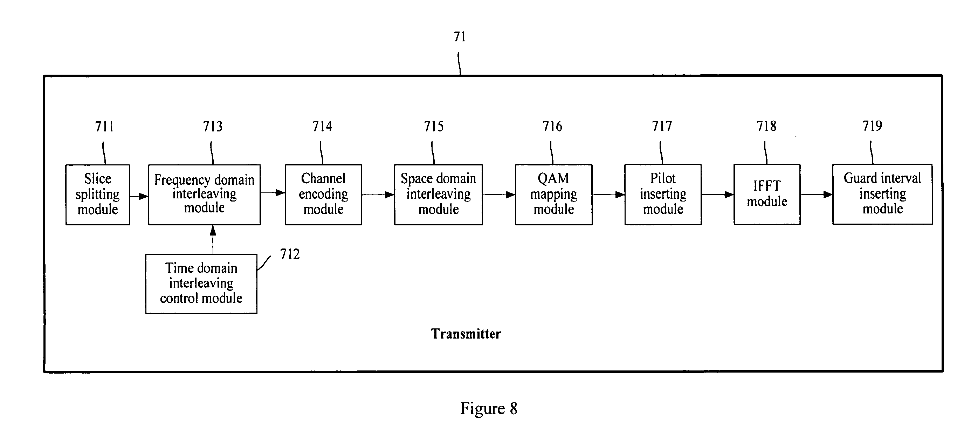

Figure 8 shows the structure of a transmitting end provided in an embodiment of the present invention. As shown in Figure 8, a transmitting end 71 includes:

a slice splitting module 711, configured to split compressed video data input externally into slice structures and send the slice structures to the frequency domain interleaving module 713;

a time domain interleaving control module 712, configured to save the conditions of updating the slice allocation rules, and, when detecting that the update conditions are satisfied, send an update indication to the frequency domain interleaving module 713;

a frequency domain interleaving module 713, configured to save the slice allocation rule information, and, when receiving a slice structure from the slice splitting module 711 and receiving no update indication from the time domain interleaving control module 712, use the slice allocation rule identical to the rule applied to previous video frame to allocate the adjacent slice structures of the received current video frame to non-adjacent OFDM sub-channels or sub-channel groups, send the slice structures to the channel encoding module 714, and, when receiving a slice structure from the slice splitting module 711 and receiving an update indication from the time domain interleaving control module 712, use the slice allocation rule which is different from the rule applied to the previous video frame to allocate the adjacent slice structure of the received current video frame to the non-adjacent OFDM sub-channels or sub-channel group, and send the slice structures to the channel encoding module 714;

a channel encoding module 714, configured to encode the data on the OFDM sub-channels or sub-channel group from the frequency domain interleaving module 713 and send the encoded data to the space domain interleaving module 715;

a space domain interleaving module 715, configured to perform space domain interleaving for the data on the OFDM sub-channels or sub-channel group from the channel encoding module 714, and send the obtained data to the QAM mapping module 716;

a QAM mapping module 716, configured to perform QAM mapping for the data on each OFDM sub-channel or sub-channel group from the space domain interleaving module 715, and send the encoded data to the pilot inserting module 717;

a pilot inserting module 717, configured to receive the data on each OFDM sub-channel or sub-channel group from the QAM mapping module 716, insert the pilot data into the OFDM sub-channel, and send the data on each OFDM sub-channel or sub-channel group to the IFFT module 718;

an IFFT module 718, configured to perform IFFT for the data on each OFDM sub-channel or sub-channel group from the pilot inserting module 717 and send the obtained data to the guard interval inserting module 719; and

a guard interval inserting module 719, configured to insert a guard interval to the data on each OFDM sub-channel or sub-channel group from the IFFT module 718 and send the obtained data to the receiving end.

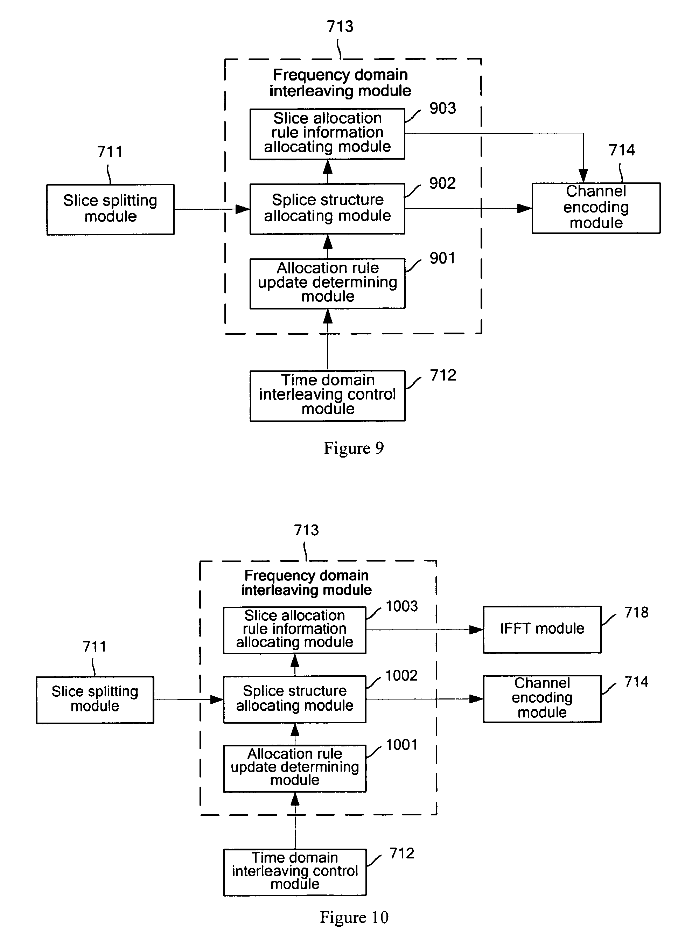

Figure 9 is the first schematic diagram for the structure of a frequency domain interleaving module provided in an embodiment of the present invention. A frequency domain interleaving module includes:

an allocation rule update determining module 901, configured to send an allocation rule update indication to the slice structure allocation module 902 after receiving an update indication from the time domain interleaving control module 712;

a slice structure allocation module 902, configured to save the slice allocation rule information, and, when receiving a slice structure from the slice splitting module 711 and receiving no allocation rule update indication from the allocation rule update determining module 901, use the slice allocation rule identical to the rule applied to previous video frame to allocate the adjacent slice structures of the received current video frame to the non-adjacent OFDM sub-channels or sub-channel group, send the slice structures to the channel encoding module 714, and, when receiving a slice structure from the slice splitting module 711 and receiving an allocation rule update indication from the allocation rule update determining module 901, use the slice allocation rule which is different from the rule applied to the previous video frame to allocate the adjacent slice structure of the received current video frame to the non-adjacent OFDM sub-channels or sub-channel group, send the slice structures to the channel encoding module 714, and send the currently applied slice allocation rule information to the slice allocation rule information allocating module 903; and

an slice allocation rule information allocating module 903, configured to allocate the slice allocation rule information from the slice structure allocating module 902 to the OFDM sub-channel, and send the data on the OFDM sub-channel to the channel encoding module 714.

Figure 10 is the second schematic diagram for the structure of a frequency domain interleaving module provided in an embodiment of the present invention. A frequency domain interleaving module includes: an allocation rule update determining module 1001, a slice structure allocating module 1002, and a slice allocation rule information allocating module 1003.

The allocation rule update determining module 1001 is the same as the allocation rule update determining module 901; the slice structure allocating module 1002 is the same as the slice structure allocating module 902; the slice allocation rule information allocating module 1003 is different from the slice allocation rule information allocating module 903 in that: the slice allocation rule information allocating module 1003 allocates the slice allocation rule information from the slice structure allocating module 1002 to the OFDM sub-channel, and then sends the data on the OFDM sub-channel to the IFFT module 718.

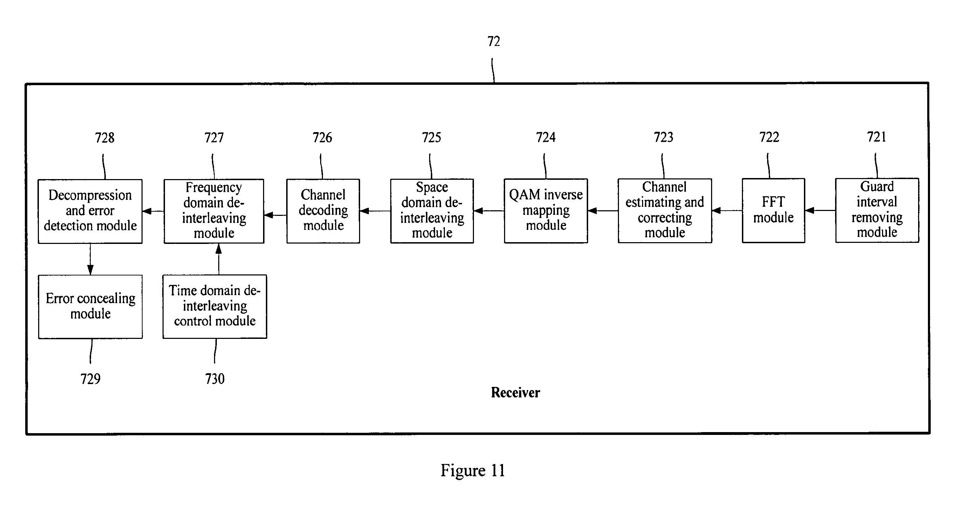

Figure 11 shows the structure of a receiving end provided in an embodiment of the present invention. As shown in Figure 11, a receiving end 72 includes:

a guard interval removing module 721, configured to remove the guard interval on the data on each OFDM sub-channel or sub-channel group sent from the transmitting end 71 and send the obtained data to the FFT module 722;

an FFT module 722, configured to perform FFT for the data on each OFDM sub-channel or sub-channel group from the guard interval removing module 721 and send the obtained data to the channel estimating and correcting module 723;

a channel estimating and correcting module 723, configured to estimate the channel features according to the pilot data on the OFDM sub-channel sent from the FFT module, correct the compressed video data on the OFDM sub-channel or sub-channel group according to the estimation result, and send the obtained data to the QAM inverse mapping module 724;

a QAM inverse mapping module 724, configured to perform QAM inverse mapping for the data on each OFDM sub-channel or sub-channel group from the channel estimating and correcting module 723 and send the obtained data to the space domain de-interleaving module 725;

a space domain de-interleaving module 725, configured to perform space domain de-interleaving for the data on the OFDM sub-channels or sub-channel group from the QAM inverse mapping module 724 and send the obtained data to the channel decoding module 726;

a channel decoding module 726, configured to decode the data on each OFDM sub-channel or sub-channel group from the space domain de-interleaving module 725 and output the encoded data to the frequency domain de-interleaving module 727;

a frequency domain de-interleaving module 727, configured to read the slice structures on each OFDM sub-channel or sub-channel group from the channel decoding module 726, arrange the slice structures, and send the arranged slice structures to the decompression & error detection module 728;

a decompression and error detection module 728, configured to decompress the compressed video data composed of slice structures from the frequency domain de-interleaving module 727, and, when detecting that any error occurs on a slice structure, send the information related to the slice structure (for example, frame identifier of the video frame that contains the slice structure, the location of the slice structure in the video frame) to the error concealing module 729; and

an error concealing module 729, configured to receive the slice structure information sent by the decompression and error detection module 728, and, according to the information on the erroneous slice structure, conceal the errors of the erroneous slice structure by using the slice structure which is successfully received by the video frame adjacent to the video frame containing the erroneous slice structure and is adjacent to the erroneous slice structure.

Further, the receiving end 72 includes a time domain de-interleaving control module 730, configured to send the slice allocation rule information (which is configured on the time domain interleaving control module, or is sent from the channel decoding module 726 or FFT module 722 and is updated on a preset OFDM sub-channel) to the frequency domain de-interleaving module 727, whereupon the frequency domain de-interleaving module 727 arranges the slice structures according to the slice allocation rule information.

After study of the above embodiments, those skilled in the art understand that the invention may be realized through software and general hardware platforms or through hardware only. In most cases, it is preferred to use software plus general hardware platforms. Based on such understanding, the technical solution provided in embodiments of the invention or contributions to the prior art can be embodied in software products. The software is stored in a storage medium and incorporates several instructions to instruct a computer device, for example, a PC, a server, or a network device, to execute the method provided in the embodiments of the present invention. It should be appreciated that the foregoing is only preferred embodiments of the invention and is not used to limit the invention. Any modification, equivalent substitution, and improvement without departing from the spirit and principle of this invention shall be covered in the protection scope of the invention.

Although the invention has been described through some exemplary embodiments, the invention is not limited to such embodiments. It is apparent that those skilled in the art can make various modifications and variations to the invention without departing from the scope of the invention. The invention shall cover the modifications and variations provided that they fall in the scope of protection defined by the following claims or their equivalents.

**Claims**

1. A method for concealing errors, comprising:

   receiving, by a transmitting end, compressed video data and splitting the compressed video data into slice structures;
   allocating the adjacent slice structure to a non-adjacent Orthogonal Frequency Division Multiplexing, QFDM, sub-channel or sub-channel group and sending the slice structure to a receiving end;
   reading, by the receiving end, the slice structure from the OFDM sub-channel or sub-channel group and detecting the slice structure; and
   if errors are detected on a slice structure, concealing the errors of the slice structure according to the slice structure which is chronologically or spatially related to the erroneous slice structure.

2. The method of claim 1, after receiving compressed video data and splitting the compressed video data into slice structures and before allocating the adjacent slice structure to the non-adjacent QFDM sub-channel or sub-channel group, further comprising:

   determining, by the transmitting end, whether the conditions of updating the slice allocation rule are satisfied;
   if the conditions are satisfied, allocating adjacent slice structures to non-adjacent OFDM sub-channels or sub-channel groups according to the slice allocation rule

   wherein the slice allocation rule is preset and different from the rule applied to the previous video frame; and
   if the conditions are not satisfied, allocating adjacent slice structures to non-adjacent OFDM sub-channels or sub-channel groups according to the slice allocation rule wherein the slice allocation rule is the same as the rule applied to the previous video frame.

3. The method of claim 1, wherein the allocating the adjacent slice structure to the non-adjacent QFDM sub-channel or sub-channel group comprises: one of Two-time odd-even interleaving method and One-second interleaving method A and One-second interleaving method B, or any combination of parts.

4. The method of claim 2, wherein the process of determining whether the conditions of updating the slice allocation rule are satisfied comprising:

   detecting whether the current <u>hits</u> the preset update time; or
   detecting whether the number of currently received video <u>frames is equal to</u> the threshold for updating the preset slice allocation rule; or
   detecting whether an indication is obtained by the receiving end.

5. The method of claim 4, before determining whether the conditions of updating the slice allocation rule are satisfied, further comprising:

   when the receiving end detects the quality of the OFDM sub-channel lower than the preset channel quality, sending, by the receiving end, an indication of updating slice allocation rules to the transmitting end; and after receiving the indication, determining, by the transmitting end, the conditions of updating the slice allocation rule are satisfied; or
   if detecting that data errors exist and the number of errors or non-correctible errors hits a preset threshold, sending, by the receiving end, an indication of updating the slice allocation rule to the transmitting end, and after receiving the indication, determining, by the transmitting end, the conditions of updating the slice allocation rule are satisfied; or
   during decompression of the compressed video data composed of slice structures, if detecting that a slice structure is erroneous and the number of errors hits a preset threshold, sending, by the receiving end, an indication of updating the slice allocation rule to the transmitting end, and after receiving the indication, determining, by the transmitting end, the conditions of updating the slice allocation rule are satisfied.

6. The method of claim 1, further comprising:

   sending, the by the transmitting end, the slice allocation rule of allocating adjacent slice structures to non-adjacent OFDM sub-channels or sub-channel groups to the receiving end; and

wherein after getting the slice allocation rule and before detecting errors on the slice structure, the method further comprises:

arranging, by the receiving end, according to the slice allocation rule, the slice structure of reading.

**7.** The method of claim 6, wherein the process of sending, by the transmitting end, the slice allocation rule of allocating adjacent slice structures to non-adjacent OFDM sub-channels or sub-channel groups to the receiving end comprises:

sending, by the transmitting end, the slice allocation rule information to the receiving end beforehand; or
pre-configuring the rule information onto the transmitting end; or
allocating the slice allocation rule information to an OFDM sub-channel, and sending the slice allocation rule information by the OFDM sub-channel to the transmitting end.

**8.** The method of claim 7, wherein the process of allocating the slice allocation rule information to an OFDM sub-channel, and sending the slice allocation rule information by the OFDM sub-channel to the transmitting end comprises:

performing, by the transmitting end, channel encoding, spatial domain interleaving, and QAM mapping to the slice allocation rule information together with the slice structure, and undergoing IFFT and guard interval insertion together with the slice structure on other OFDM sub-channels, and after IFFT and guard interval insertion processing to the slice allocation rule information together, the slice structure, together with the inserted pilot signal, sending them to the transmitting end.

**9.** The method of claim 7, wherein the process of allocating the slice allocation rule information to an OFDM sub-channel, and sending the slice allocation rule information by the OFDM sub-channel to the transmitting end comprises:

sending the slice allocation rule information and the slice allocation undergoing IFFT and guard interval insertion together with a pilot signal, to the transmitting end.

**10.** The method of claim 1, wherein after the process of reading the slice structure from the OFDM sub-channel or sub-channel group and detecting the slice structure and before detecting errors, the method further comprises:

reading, by the transmitting end, a serial number of the packet data in the slice structure, and arranging the slice structure.

**11.** The method of claim 1, wherein after the process of allocating the adjacent slice structure to the non-adjacent QFDM sub-channel or sub-channel group and before sending the slice structure to the receiving end, the method further comprises:

performing channel encoding, space domain interleaving, QAM mapping, inserting a pilot signal, and performing IFFT and guard interval insertion for the slice structure allocated to each OFDM sub-channel or sub-channel group.

**12.** The method of claim 11, wherein after the process of sending the slice structure to the transmitting end and before the receiving end reading the slice structure from OFDM sub-channel or sub-channel group, the method further comprises:

removing, by the receiving end, the guard interval, performing Fast Fourier Transform, performing channel correction and channel decoding according to the inserted pilot signal.

**13.** The method of claim 1, wherein the slice structure which is chronologically or spatially related to the erroneous slice structure comprises:

being located in the reference video frame of the video frame containing the erroneous slice structure, and related to the position of the erroneous slice structure; or
being located in the video frame containing the erroneous slice structure, and adjacent to the erroneous slice structure.

**14.** A system for concealing errors, comprising:

a transmitting end, configured to: after receiving compressed video data input externally, split the compressed video data into slice structures, allocate adjacent slice structures to the non-adjacent OFDM sub-channel or sub-channel group, and send the slice structures to the receiving end; and
a receiving end, configured to read the slice structures on the OFDM sub-channel or sub-channel group from the transmitting end, and, if any error is detected on a slice structure, conceal the error of the slice structure according to the slice structure which is chronologically or spatially related to the erroneous slice structure.

**15.** The system of claim 14, the transmitting end comprising: a slice splitting module and a frequency domain interleaving module, wherein

the slice splitting module is configured to split compressed video data input externally into slice structures and send the slice structures to the frequency domain interleaving module; and
the frequency domain interleaving module is configured to allocate the adjacent slice structure to the non-adjacent QFDM sub-channel or sub-channel group and sending the slice structure to the receiving end.

**16.** The system of claim 15, wherein the transmitting end further comprises:

a time domain interleaving control module, configured to save the conditions of updating the slice allocation rules, and, when detecting that the update conditions are satisfied, send an update indication to the frequency domain interleaving module, and

wherein the frequency domain interleaving module further comprises:

an allocation rule update determining module, configured to send an allocation rule update indication to the slice structure allocation module after receiving an update indication from the time domain interleaving control module; and
a slice structure allocation module, configured to receive the slice structure of the compressed video packet data,

wherein if an indication of updating the preset slice allocation rule is not received, the slice structure allocation module uses the slice allocation rule identical to the rule applied to previous video frame to allocate the adjacent slice structures of the received current video frame to the non-adjacent OFDM sub-channels or sub-channel group, and sends the slice structures to the receiving end; and
if the indication of updating the preset slice allocation rule is received, the slice structure allocation module uses the slice allocation rule which is different from the rule applied to the previous video frame to allocate the adjacent slice structure of the received current video frame to the non-adjacent OFDM sub-channels or sub-channel group, and sends the slice structures to the receiving end.

**17.** The system of claim 14, wherein the receiving end comprises:

a frequency domain de-interleaving module, configured to read the slice structures on each OFDM sub-channel or sub-channel group from the transmitting end, arrange the slice structures, and send the arranged slice structures to the decompression & error detection module;
a decompression and error detection module, configured to decompress the received slice structure, and if any error is detected on the slice structure, send the slice structure information to the error concealing module; and
an error concealing module, configured to, after receiving the slice structure information from the decompression & error detection module, conceal the errors of the slice structure according to the slice structure which is chronologically or spatially related to the erroneous slice structure.

**18.** A transmitting end comprising: a slice splitting module and a frequency domain interleaving module, wherein:

the slice splitting module is configured to split compressed video data input externally into slice structures and send the slice structures to the frequency domain interleaving module; and
the frequency domain interleaving module is configured to allocate the received adjacent slice structures of the current video frame to the non-adjacent OFDM sub-channel or sub-channel group and send the slice structures to the receiving end.

**19.** The transmitting end of claim 18, further comprising:

a time domain interleaving control module, configured to save the conditions of updating the slice allocation rules, and, when detecting that the update conditions are satisfied, send an update indication to the frequency domain interleaving module, and

wherein the frequency domain interleaving module further comprises:

an allocation rule update determining module, configured to send an allocation rule update indication to the slice structure allocation module after receiving an update indication from the time domain interleaving control module; and

a slice structure allocation module configured to receive the slice structure of the compressed video packet data; wherein

if an indication of updating the preset slice allocation rule is not received, the slice structure allocation module uses the slice allocation rule identical to the rule applied to previous video frame to allocate the adjacent slice structures of the received current video frame to the non-adjacent OFDM sub-channels or sub-channel group, and sends the slice structures to the receiving end; and

if the indication of updating the preset slice allocation rule is received, the slice structure allocation module uses the slice allocation rule which is different from the rule applied to the previous video frame to allocate the adjacent slice structure of the received current video frame to the non-adjacent OFDM sub-channels or sub-channel group, and sends the slice structures to the receiving end.

20. The transmitting end of claim 18, further comprising: a channel encoding module, a space domain interleaving module, a QAM mapping module, a pilot inserting module, an IFFT module, and a guard interval inserting module, wherein

the channel encoding module is configured to encode the data on the OFDM sub-channels or sub-channel group from the frequency domain interleaving module and send the encoded data to the space domain interleaving module,

the space domain interleaving module is configured to perform space domain interleaving for the data on the OFDM sub-channels or sub-channel group from the channel encoding module, and send the obtained data to the QAM mapping module,

the QAM mapping module is configured to perform QAM mapping for the data on each OFDM sub-channel or sub-channel group from the space domain interleaving module, and send the encoded data to the pilot inserting module,

the pilot inserting module is configured to receive the data on each OFDM sub-channel or sub-channel group from the QAM mapping module, insert the pilot data into the OFDM sub-channel, and send the data on each OFDM sub-channel or sub-channel group to the IFFT module,

the IFFT module is configured to perform IFFT for the data on each OFDM sub-channel or sub-channel group from the pilot inserting module and send the obtained data to the guard interval inserting module, and

the guard interval inserting module is configured to insert a guard interval to the data on each OFDM sub-channel or sub-channel group from the IFFT module and send the obtained data to the receiving end.

21. The transmitting end of claim 19, further comprising:

a channel encoding module, configured to encode the data of receive and send to the receiving end; and after the slice splitting module receives the indication of updating the preset slice allocation rule, send the preset slice allocation rule to the frequency domain interleaving module; and

the frequency domain interleaving module further comprising an slice allocation rule information allocating module, and the slice allocation rule information allocating module configured to allocate the slice allocation rule information from the slice structure allocating module to the OFDM sub-channel, and send the data on the OFDM sub-channel to the channel encoding module.

22. The transmitting end of claim 19, wherein:

the IFFT module is further configured to perform IFFT for the received data and sending to receiving end; and after the slice splitting module receives the indication of updating the preset slice allocation rule, send the preset slice allocation rule to the frequency domain interleaving module, and

the frequency domain interleaving module further comprising an slice allocation rule information allocating module, and the slice allocation rule information allocating module configured to allocate the slice allocation rule information from the slice structure allocating module to the OFDM sub-channel, and send the data on the OFDM sub-channel to the channel encoding module.

23. A receiving end comprising: a frequency domain de-interleaving module, a decompression and error detection module, and an error concealing module, wherein:

the frequency domain de-interleaving module is configured to read the slice structures on each OFDM sub-channel or sub-channel group from a transmitting end, arrange the slice structures, and send the arranged slice structures to the decompression & error detection module;
the decompression and error detection module is configured to decompress the received slice structure, and, if any error is detected on the slice structure, send the slice structure information to the error concealing module; and
the error concealing module is configured to, after receiving the slice structure information from the decompression & error detection module, conceal the errors of the slice structure according to the slice structure which is chronologically or spatially related to the erroneous slice structure.

24. The receiving end of claim 23, further comprising: a guard interval removing module, an FFT module, a channel estimating and correcting module, a QAM inverse mapping module, a space domain de-interleaving module, and a channel decoding module,
wherein:

the guard interval removing module is configured to remove the guard interval on the data on each OFDM sub-channel or sub-channel group sent from a transmitting end and send the obtained data to the FFT module;
the FFT module is configured to perform FFT for the data on each OFDM sub-channel or sub-channel group and send the obtained data to the channel estimating and correcting module;
the channel estimating and correcting module is configured to estimate the channel features according to the pilot data on the OFDM sub-channel, correct the compressed video data on the OFDM sub-channel or sub-channel group according to the estimation result, and send the obtained data to the QAM inverse mapping module;
the QAM inverse mapping module is configured to perform QAM inverse mapping for the data on each OFDM sub-channel or sub-channel group from the channel estimating and correcting module and send the obtained data to the space domain de-interleaving module;
the space domain de-interleaving module is configured to perform space domain de-interleaving for the data on the OFDM sub-channels or sub-channel group and send the obtained data to the channel decoding module;
the channel decoding module is configured to decode the data on each OFDM sub-channel or sub-channel group and output the encoded data to the frequency domain de-interleaving module.

25. The receiving end of claim 23, further comprising:

a time domain de-interleaving control module, configured to send the slice allocation rule information which is configured on the time domain interleaving control module, or is sent from the channel decoding module or FFT module and is updated on a preset OFDM sub-channel to the frequency domain de-interleaving module.

EP 2 093 957 A1

Input of compressed video data → Channel encoding → QAM mapping → Inserting pilot → IFFT → Inserting guard interval → Time-varying mobile radio channel

Time-varying mobile radio channel → Removing guard interval → FFT → Correcting channel feature → QAM inverse mapping → Channel decoding → Decompression and error concealing

Estimating channel feature

Compressed video data

Figure 1

The transmitter receives compressed video data. `201`

Split the compressed video data into slice structures. `202`

Check whether the conditions of updating the slice allocation rule are concurrently satisfied. `203`

No

Yes

Allocate adjacent slice structures to non-adjacent OFDM sub-channels or sub-channel groups according to the slice allocation rule which is different from the rule applied to the previous video frame. `204`

Allocate adjacent slice structures to non-adjacent OFDM sub-channels or sub-channel groups according to the slice allocation rule which is the same as the rule applied to the previous video frame. `205`

Perform channel encoding, space domain interleaving and QAM mapping for the slice structure on each OFDM sub-channel or sub-channel group. `206`

Insert a pilot signal onto the OFDM sub-channel; perform IFFT and guard interval insertion for the data and pilot signals obtained from mapping of the slice structure, and send them to the receiver. `207`

The receiver performs guard interval removal, FFT, channel feature estimation and correction, QAM inverse mapping, space domain de-interleaving, and channel decoding to obtain an original slice structure. `208`

If errors are detected on a slice structure, the receiver conceals the errors of the slice structure according to the slice structure which is chronologically or spatially related to the erroneous slice structure. `209`

Figure 2

Figure 3

The transmitter receives compressed video packet data. ⟋401

Split the compressed video packet data into slice structures. ⟋402

Check whether the conditions of updating the slice allocation rule are concurrently satisfied. ⟋403 — N

Y

Allocate adjacent slice structures to non-adjacent OFDM sub-channels or sub-channel groups according to the slice allocation rule which is different from the rule applied to the previous video frame. ⟋404

Allocate adjacent slice structures to non-adjacent OFDM sub-channels or sub-channel groups according to the slice allocation rule which is the same as the rule applied to the previous video frame. ⟋405

Perform channel encoding, space domain interleaving and QAM mapping for the slice structure on each OFDM sub-channel or sub-channel group. ⟋406

Insert a pilot signal onto the OFDM sub-channel; perform IFFT and guard interval insertion for the data and pilot signals obtained from mapping of the slice structure, and send them to the receiver. ⟋407

The receiver performs guard interval removal, FFT, channel feature estimation and correction, QAM inverse mapping, space domain de-interleaving, and channel decoding to obtain an original slice structure. ⟋408

Rearrange the slice structures according to the serial number of the packet in slice structure. ⟋409

Check whether any error occurs on the slice structure. ⟋410 — N

Y

This process ends.

Check whether the slice structure in the counterpart position of the adjacent video frame is received successfully. ⟋411 — N

Y

The receiver conceals the errors according to the slice structure in the counterpart position in the adjacent video frame. The process ends. ⟋412

The receiver conceals errors according to the adjacent slice structure of the current video frame.

Figure 4

| |
|---|
| Slice1 |
| Slice2 |
| Slice3 |
| Slice4 |
| ... |

Figure 5-1

Figure 5-2

Figure 5-3

| Slice1 |
|---|
| Slice2 |
| Slice3 |
| Slice4 |
| ... |

Figure 6-1

Figure 6-2

Figure 6-3

71

Transmitter → Receiver

72

Figure 7

Figure 8

713

Frequency domain
interleaving module

Slice allocation
rule information
allocating module    903

711

Slice splitting
module

Splice structure
allocating module    902

714

Channel
encoding
module

Allocation rule
update determining
module    901

Time domain
interleaving control
module    712

Figure 9

713

Frequency domain
interleaving module

Slice allocation
rule information
allocating module    1003

718

IFFT module

711

Slice splitting
module

Splice structure
allocating module    1002

714

Channel
encoding
module

Allocation rule
update determining
module    1001

Time domain
interleaving control
module    712

Figure 10

Figure 11

# INTERNATIONAL SEARCH REPORT

| International application No. |
|---|
| PCT/CN2007/003547 |

**A. CLASSIFICATION OF SUBJECT MATTER**

## See extra sheet

According to International Patent Classification (IPC) or to both national classification and IPC

**B. FIELDS SEARCHED**

Minimum documentation searched (classification system followed by classification symbols)

IPC: H04L   H04N

Documentation searched other than minimum documentation to the extent that such documents are included in the fields searched

Electronic data base consulted during the international search (name of data base and, where practicable, search terms used)WPI,

EPODOC, PAJ, CNPAT, CNKI: error w conceal+, OFDM, video, slice, orthogonal w frequency w division w multiplexing

**C. DOCUMENTS CONSIDERED TO BE RELEVANT**

| Category* | Citation of document, with indication, where appropriate, of the relevant passages | Relevant to claim No. |
|---|---|---|
| A | CN1856112A (HUAWEI TECHNOLOGIES CO LTD) 01 Nov. 2006 (01.11.2006) See the whole document | 1-25 |
| A | CN1784009A (UT STARCOM INC) 07 Jun. 2006 (07.06.2006) See the whole document | 1-25 |
| A | WO2005069627A1 (SAMSUNG ELECTRONICS CO LTD) 28 Jul. 2005 (28.07.2005) See the whole document | 1-25 |
| A | WO2006048788A1 (KONINK PHILIPS ELECTRONICS NV) 11 May 2006(11.05.2006) See the whole document | 1-25 |

☒ Further documents are listed in the continuation of Box C.     ☒ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 10 March 2008 (10.03.2008) | **20 Mar. 2008 (20.03.2008)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **LIU Xinke** Telephone No. (86-10)62411274 |
|---|---|

Form PCT/ISA/210 (second sheet) (April 2007)

<table>
<tr><td colspan="2" align="center">**INTERNATIONAL SEARCH REPORT**</td><td>International application No.<br><br>PCT/CN2007/003547</td></tr>
</table>

**C (Continuation). DOCUMENTS CONSIDERED TO BE RELEVANT**

| Category* | Citation of document, with indication, where appropriate, of the relevant passages | Relevant to claim No. |
|---|---|---|
| A | ZHENG Chunyun :" Study on Order Self-adaptive and Detail Optimized Temporal Error Concealment Algorithm in H.264", <JILIN University Master's Degree Dissertation> 04. August 2006(04.08.2006) chapter 2-3 | 1-25 |
| A | ZHANG Rongfu & ZHOU Yuanhua: "An Error Concealment Method for Video Communications Considering both Frequency and Spatial Domains", <JOURNAL OF SHANGHAI JIAOTONG UNIVERSITY>, Apr. 2004, Vol.38 No.4, Page 606-609 | 1-25 |

Form PCT/ISA/210 (continuation of second sheet ) (April 2007)

## INTERNATIONAL SEARCH REPORT
Information on patent family members

| | International application No. |
|---|---|
| | PCT/CN2007/003547 |

| Patent Documents referred in the Report | Publication Date | Patent Family | Publication Date |
|---|---|---|---|
| CN1856112A | 01.11.2006 | WO2006111087A1 | 26.10.2006 |
| CN1784009A | 07.06.2006 | NONE | |
| WO2005069627A1 | 28.07.2005 | US2005157800 A1 | 21.07.2005 |
| | | KR20050076155A | 26.07.2005 |
| | | CN1918916A | 21.02.2007 |
| | | JP2007519338T | 12.07.2007 |
| WO2006048788A1 | 11.05.2006 | EP1813120A1 | 01.08.2007 |
| | | KR20070083993A | 24.08.2007 |
| | | CN101057505A | 17.10.2007 |

Form PCT/ISA/210 (patent family annex) (April 2007)

# INTERNATIONAL SEARCH REPORT

International application No.

PCT/CN2007/003547

CLASSIFICATION OF SUBJECT MATTER

H04L 27/26 (2006.01) i

H04N 7/68 (2006.01) i